# EUROPEAN PATENT SPECIFICATION

(11) **EP 2 642 717 B1**
(45) Date of publication and mention of the grant of the patent: **13.07.2016**
(21) Application number: 12305327.4
(22) Date of filing: 20.03.2012
(51) Int. Cl.: G06F 21/62, H04L 29/06

(54) **Process for transmitting data to an entity in a network infrastructure**
Datenübertragungsverfahren an eine Einheit in einer Netzwerkinfrastruktur
Méthode de transmission de données à une entité dans une infrastructure de réseau

(43) Date of publication of application: 25.09.2013
(73) Proprietor: ALCATEL LUCENT, 92100 Boulogne-Billancourt (FR)
(72) Inventor: Betge-Brezetz, Stéphane, 91620 Nozay (FR); Kamga, Guy-Bertrand, 91620 Nozay (FR); Aghasaryan, Armen, 91620 Nozay (FR)
(74) Representative: Berthier, Karine

(56) References cited:
- EP-A2- 2 214 119
- RAED M SALIH ET AL: "Privacy Protection in Pervasive Healthcare Monitoring Systems with Active Bundles", PARALLEL AND DISTRIBUTED PROCESSING WITH APPLICATIONS WORKSHOPS (ISPAW), 2011 NINTH IEEE INTERNATIONAL SYMPOSIUM ON, IEEE, 26 May 2011 (2011-05-26), pages 311-315, XP031894897, DOI: 10.1109/ISPAW.2011.60 ISBN: 978-1-4577-0524-3

## Description

The invention relates to a process for transmitting data to an entity over a network infrastructure and a file for embedding data to be transmitted to such an entity according to such a process.

In network infrastructures, notably cloud infrastructures, a lot of privacy sensitive data are travelling to be exchanged and/or used by different entities. However, it is currently difficult to control the travelling of data, which is annoying for the owners of such data, for example end-users or consumers, and for the users of said data, for example professional markets.

To secure the travelling of data, it is often necessary to deploy heavy mechanisms, such as additional software components, in the network infrastructure and/or in the execution environment of the entity owning said data. Such solutions may however raise additional costs and their deployment may require complex operations, so that they are not largely accessible. Moreover, such solutions are rather interesting for protecting very sensitive data but can be overdimensioned for more general cases.

There also exist some solutions for protecting privacy sensitive data that are easier to implement and/or to use. For example, some applications such as WinZip® can allow a user to create executable compressed files for embedding his data and to associate a password to said files, so that another entity will have to enter said password to extract the data from said files.

Those applications are nevertheless very limited, as they do not allow a user to define privacy policies to specify how the data should be extracted, for example fully or partially, nor under what conditions.

There are also some technologies of sticky policies, such as the technology presented in the article "Enforcing "Sticky" Security Policies throughout a Distributed Application" (D.W. CHADWICK and S.F. LIEVENS, ACM Workshop, MidSec 2008, Leuven, Belgium, December 1-5, 2008). Those technologies consist in accompanying travelling data with privacy protection policies that should apply all along the movement path of said data.

However, those solutions currently require the presence of an external module, such as a plug-in module, for checking and applying the privacy policies that accompany the data. Thus, the network environment must be instrumented.

There are also some technologies wherein sensitive data are embedded into an active bundle that further comprises metadata for describing said bundle and its private policies, as well as a virtual machine for guaranteeing the appropriate access control for said sensitive data, said virtual machine further comprising dedicated means for understanding the metadata. An example of such a technology is described in detail in the article "Protecting Privacy of Sensitive Data Dissemination Using Active Bundles" (L. BEN OTHMANE and L. LILIEN, 2009 World Congress on Privacy, Security and Trust and the Management of e-Business) and in "Privacy Protection in Pervative Healthcare Monitoring Systems with Actives Bundles" (L. BEN OTHMANE et al., 2011).

But for this technology, the underlying execution environment of the entity, as for example its operating system, is considered as unsure, so that said technology provides an overall security architecture which comprises notably a trust server, a security server and an active bundle directory server, and thus is complex to deploy.

Besides, this technology does not give complete satisfaction, as it does not provide for defining privacy policies by using the characteristics of the execution environment, notably the hardware components that are used by the entity to execute the active bundle.

The invention aims to improve the prior art by proposing a solution for ensuring privacy protection of travelling data with a sufficient level of security, said solution being intuitive and easily usable with different environments, as it does not request the instrumentation of said environments.

For that purpose, and according to a first aspect, the invention relates to a process for transmitting data to an entity over a network infrastructure, said process providing for embedding said data into a file that further contains privacy policies about the access conditions to said data by said entity and means for applying said policies, said process further providing for, as said entity tries to execute said file:
- collecting information about said entity and the execution environment of said entity;
- analysing said information to determine a degree of safety, at least one action to perform being chosen according to the privacy policies and to said degree;
- extracting parts of said data from said file according to said chosen action;
- delivering said extracted data to said entity through said execution environment.

According to a second aspect, the invention relates to a file for embedding data to be transmitted to an entity over a network infrastructure, said file containing privacy policies about the access conditions to said data by said entity and means for applying said policies, said means comprising:
- an identification function for collecting information about said entity and execution environment of said entity;
- a checking function for analysing said information to determine a degree of safety, said function being able for choosing at least one action to perform according to the privacy policies and to said degree;
- an extraction function for extracting parts of said data from said file according to said chosen action, said function further being adapted to deliver said extracted data to said entity through said execution environment.

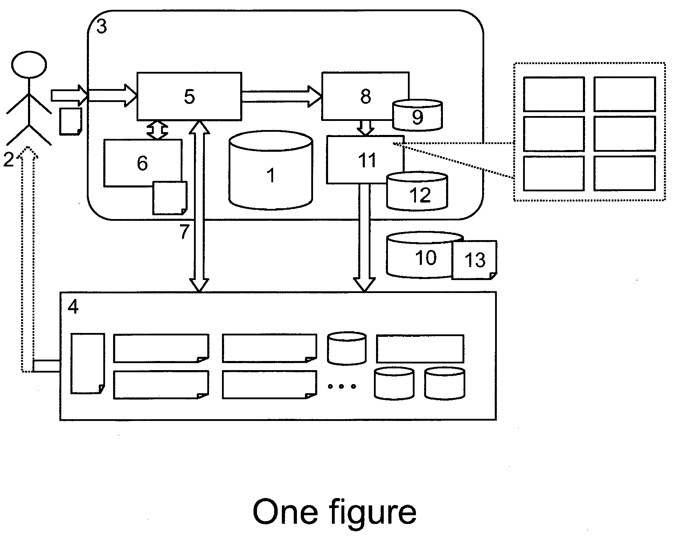

Other aspects and advantages of the invention will become apparent in the following description made with reference to the appended figure representing schematically the implementation of a process according to the invention.

In relation to this figure, a process for transmitting data 1 to an entity 2 over a network infrastructure is described below.

At first, the process provides for embedding the data 2 to be transmitted into a file 3 that further contains privacy policies about the access conditions to said data by the entity and means for applying said policies. In particular, the file 3 is an executable file and the means for applying the policies are controlled by a dedicated program which is embedded into said executable file.

To do so, the process can provide a specific application to enable the sender of the data 1 to create such a file 3 and to embed said data with such privacy policies into said file, before sending said file to the entity 2.

As the entity 2 tries to execute the file 3, the process provides for collecting information about said entity and execution environment 4 of said entity. For example, the entity 2 can be a human user, as represented on the figure, or an application.

Moreover, the execution environment 4 can concern the characteristics of the hardware used by the entity 2, the type and/or the version of its operating system, the eventual presence of security means on said hardware, such as antivirus or patch software, the geographic localization of said hardware, the user rights and/or the credentials of said entity.

To do so, the means for applying privacy policies of the file 3 comprise an identification function 5 for collecting information about the entity 2 and execution environment 4 of said entity.

The process can also provide for providing the execution environment 4 with a certificate ensuring that the file 3 is safe before the extraction of data 1 from said file, for example to avoid some problems with eventual antivirus software of said execution environment. To do so, the means for applying policies of the file 3 can comprise a certification function 6 which provides the execution environment 4 with such a certificate in order to ensure said environment that said file is not a malicious component, such as a malware (for malicious software) or a virus. As represented on the figure, the identification function 5 can be adapted to interact with the certification function 6 to obtain such a certification and to send to the execution environment 4 a notification 7 comprising said certificate.

Moreover, the certification function 6 can be adapted to check the safety of the entity 2 and/or of execution environment 4, notably of the underlying operating system used by said entity, and the identification function 5 can be adapted to interact with said certification function to collect information about said safety.

Once the execution environment 4 has been ensured of safety of the file 3, it can authorize the execution of said file, and thus the continuation of the process.

The process further provides for analysing the collected information to determine a degree of safety, at least one action to perform being chosen according to the privacy policies and to said degree. To do so, the means for applying policies of the file 3 comprise a checking function 8 for analysing the collected information to determine such a degree, said checking function being adapted to choose at least one action to perform according to the privacy policies and to said degree.

In particular, the checking function 8 can be adapted to choose the action to perform according to predefined privacy policies 9 that are embedded in the file 3. For example, if the checking function 8 considers the execution environment 4 as trusted, the determined degree of safety will be maximal, and a corresponding privacy policy 9 can indicate that the embedded data 1 must be fully extracted. Thus, the action to perform would be to extract fully the data 1.

Moreover, if the checking function 8 considers the execution environment 4 as not totally trusted, the determined degree of safety will be intermediate, and a corresponding privacy policy 9 can indicate that the embedded data 1 must be only partially extracted. Thus, the action to perform would be to extract partially the data 1.

On the contrary, if the checking function 8 considers the execution environment 4 as not trusted, for example if said environment is located in an unwilling country, the determined degree of safety will be minimal, and a corresponding privacy 9 can indicate that the embedded data 1 must not be extracted. Thus, the action to perform would be to not extract the data 1.

In particular, the process can provide for deleting the file 3 without extracting the data 1 when the determined degree of safety is minimal. To do so, a dedicated privacy policy 9 for deletion of the file 3 can be predefined and embedded in said file, the checking function 8 being adapted to choose to perform an action for deleting said file according to said policy in case of a minimal degree of safety.

The process further provides for extracting parts of the data 1 from the file 3 according to the chosen action and for delivering extracted data 10 to the entity 2 through the execution environment 4. To do so, the means for applying policies of the file 3 comprise an extraction function 11 for extracting parts of the data 1 from said file according to the chosen action, said extraction function further being adapted to deliver extracted data 10 to the entity 2 through the execution environment 4.

The process can also provide for checking the usage history of the data 1, said data further being extracted according to said history. Thus, the process can for example limit the number of times the file 3 can be executed, notably by preventing the extraction of data 1 when said file has been executed a maximal number of times, which also limits the access to the data 1 embedded in said file and reinforces the security for said data. In particular, the process can limit the number of times the file 3 can be executed according to the execution environment 4 and/or any other conditions.

To do so, the file 3 can comprise a usage history 12 of the data 1, the extraction function 11 being adapted to check said history and to extract said data according to said history. In particular, the extraction function 11 can be adapted to prevent the extraction of data 1 when the file 3 has been executed a maximal number of times.

Moreover, the extraction function 11 can be adapted to delete the file 3 without extracting the data 1 when the checking function 8 has determined a minimal degree of safety and chosen to perform an action for such a deletion according to an appropriate privacy policy 9.

For reinforcing the safety of data usage, the process can also provide for associating access rights 13 to the extracted data 10 before their delivery to the entity 2. To do so, the extraction function 11 can be adapted to associate such access rights 13 to the extracted data 10 before delivering said extracted data to the entity 2.

In particular, the extraction function 11 can be adapted to associate access rights 13 to extracted data 10 according to a dedicated action chosen by the checking function 8, and thus indirectly to the privacy policies 9 and the degree of safety determined by the checking function 8.

For example, the extracted data 10 can be encrypted according to specific access rights 13 before their delivery to the entity 2, notably if the execution environment 4 is not protected by a Mandatory Access Control (MAC) mechanism. On the contrary, the extracted data 10 would not be encrypted if the execution environment 4 benefits of such a protection.

Moreover, the extracted data 10 can be associated with access rights 13 that concern actions the entity 2 is authorized to lead on said extracted data, such as copying, amending or simply reading. To do so, the extracted data 10 could be presented in the form of a Privacy Data Envelop (PDE) comprising instructions about the access rights 13 for said data, said instructions being notably applied according to information about the entity 2 that were previously collected by the identification function 5. Such a Privacy Data Envelop is notably described in details in the article "Privacy Data Envelops for Moving Privacy-sensitive Data" (A. AGHASARYAN, M.P. DUPONT, S. BETGE-BREZETZ and G.B. KAMGA, Alcatel-Lucent® Bell Labs).

Besides, the process can provide for sending a notification of the chosen action to the sender of the file 3 before extracting data 1, so that said sender intervenes in the choice of said action. In particular, the process can further provide that the chosen action must be validated by the sender of the file 3 before the extraction of data 1 according to said chosen action.

To do so, the checking function 8 can be adapted for sending a notification of the chosen action to the sender of the file 3 before the extraction function 11 extracts data 1, so that said sender validates said chosen action before the extraction function 11 extracts data 1 according to said chosen action.

Moreover, the sender of the file 3 can modify the action to be performed if he does not agree with the notified chosen action. Thus, the extraction function 11 will extract data 1 from the file 3 according to the action that has been modified by the sender.

Thus, the process of the invention allows data 1 for travelling safely, even in unsecured communication channels, since only the execution environment 4 of the recipient entity 2 will need to be secured enough to extract said data from the file 3 in which there are embedded. Moreover, the process of the invention requires no external module or component, such as software plug-in.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for transmitting data (1) to an entity (2) over a network infrastructure, said process providing for embedding said data into a file (3) that further contains privacy policies (9) about the access conditions to said data by said entity and means for applying said policies, said process further providing for, as said entity tries to execute said file:
- collecting information about said entity and execution environment (4) of said entity;
- analysing said information to determine a degree of safety, at least one action to perform being chosen according to privacy policies (9) and to said degree;
- extracting parts of said data from said file according to said chosen action;
- delivering extracted data (10) to said entity through said execution environment.

2. Process according to claim 1, **characterized in that** it further provides for providing the execution environment (4) with a certificate ensuring that the file (3) is safe before the extraction of data (1) from said file.

3. Process according to claim 1 or 2, **characterized in that** it further provides for checking the usage history (12) of the data (1), said data further being extracted according to said history.

4. Process according to any of claims 1 to 3, **characterized in that** it further provides for associating access rights (13) to the extracted data (10) before their delivery to the entity (2).

5. Process according to claim 4, **characterized in that** extracted data (10) are encrypted according to specific access rights (13) before their delivery to the entity (2).

6. Process according to any of claims 1 to 5, **characterized in that** it further provides for sending a notification of the chosen action to the sender of the file (3) before extracting data (1), so that said sender intervenes in the choice of said action.

7. Process according to any of claims 1 to 6, **characterized in that**, when the determined degree of safety is minimal, said process further provides for deleting the file (3) without extracting the data (1).

8. File (3) for embedding data (1) to be transmitted to an entity (2) in a network infrastructure, said file containing privacy policies (9) about the access conditions to said data by said entity and means for applying said policies, said means comprising:
- an identification function (5) for collecting information about said entity and execution environment (4) of said entity;
- a checking function (8) for analysing said information to determine a degree of safety, said function being adapted to choose at least one action to perform according to privacy policies (9) and to said degree;
- an extraction function (11) for extracting parts of said data from said file according to said chosen action, said function further being adapted to deliver extracted data (10) to said entity through said execution environment.

9. File (3) according to claim 8, **characterized in that** the means for applying policies further comprise a certification function (6) which provides the execution environment (4) with a certificate ensuring that the file (3) is safe before the extraction function (11) extracts data (1) from said file.

10. File (3) according to claim 8 or 9, **characterized in that** it further comprises a usage history (12) of the data (1), the extraction function (11) being adapted to check said history and to extract said data according to said history.

11. File (3) according to any of claims 8 to 10, **characterized in that** the extraction function (11) is adapted to associate access rights (13) to the extracted data (10) before delivering said extracted data to the entity (2).

12. File (3) according to claim 11, **characterized in that** the extraction function (11) is adapted to encrypt the extracted data (10) according to specific access rights (13) before delivering said extracted data to the entity (2).

13. File (3) according to any of claims 8 to 12, **characterized in that** the checking function (8) is adapted for sending a notification of the chosen action to the sender of the file (3) before the extraction function (11) extracts data (1), so that said sender intervenes in the choice of said action.

14. File (3) according to any of claims 8 to 13, **characterized in that** the extraction function (11) is adapted to delete said file without extracting the data (1) when the checking function (8) has determined a minimal degree of safety.

## Patentansprüche

1. Datenübertragungsverfahren (1) an eine Einheit (2) über eine Netzwerkinfrastruktur, wobei besagtes Verfahren das Einbetten besagter Daten in eine Datei (3) vorsieht, die weiterhin Datenschutzregelungen (9) zu den Zugangsbedingungen zu besagten Daten durch besagte Einheit und Mittel für die Anwendung besagter Regelungen enthält, wobei besagter Prozess im Zuge des Versuchs seitens besagter Einheit, besagte Datei auszuführen, weiterhin Folgendes vorsieht:
- das Sammeln von Informationen über besagte Einheit und die Ausführungsumgebung (4) besagter Entität;
- das Analysieren besagter Informationen zwecks Bestimmung eines Sicherheitsgrads, wobei gemäß besagtem Sicherheitsgrad mindestens eine auszuführende Handlung aus den Datenschutzregelungen (9) ausgewählt wird;
- das Extrahieren von Teilen besagter Daten aus besagter Datei gemäß der ausgewählten Handlung;
- das Zurverfügungstellen der ausgelesenen Daten (10) über besagte Ausführungsumgebung an besagte Einheit.

2. Verfahren nach Anspruch 1, **dadurch gekennzeichnet, dass** es weiterhin vorsieht, der Ausführungsumgebung (4) ein Zertifikat zur Verfügung zu stellen, das vor dem Extrahieren von Daten (1) aus besagter Datei gewährleistet, dass die Datei (3) sicher ist.

3. Verfahren nach Anspruch 1 oder 2, **dadurch gekennzeichnet, dass** es weiterhin die Prüfung des Nutzungsverlaufs (12) der Daten vorsieht, wobei besagte Daten im weiteren Verlauf gemäß besagtem Nutzungsverlauf ausgelesen werden.

4. Verfahren nach einem jeglichen der Ansprüche 1 bis 3, **dadurch gekennzeichnet, dass** es weiterhin vorsieht, den ausgelesenen Daten (10) vor ihrer Weiterleitung an die Einheit (2) Zugriffsrechte (13) zuzuweisen.

5. Verfahren nach Anspruch 4, **dadurch gekennzeichnet, dass** die ausgelesenen Daten (10) vor ihrer Weiterleitung an die Einheit (2) gemäß spezifischen Zugriffsrechten (13) verschlüsselt werden.

6. Verfahren nach einem jeglichen der Ansprüche 1 bis 5, **dadurch gekennzeichnet, dass** es weiterhin vorsieht, vor dem Extrahieren Daten (1) eine Benachrichtigung bezüglich der gewählten Handlung an den Sender der Datei (3) zu senden, damit der Sender in die Auswahl besagter Handlung einbezogen wird.

7. Verfahren nach einem jeglichen der Ansprüche 1 bis 6, **dadurch gekennzeichnet, dass** dann, wenn der bestimmte Sicherheitsgrad minimal ist, das besagte Verfahren weiterhin die Löschung der Datei (3) ohne das Extrahieren von Daten (1) vorsieht.

8. Datei (3) für das Einbetten von Daten (1), die an eine Einheit (2) in einer Netzwerkinfrastruktur zu übertragen sind, wobei besagte Datei Datenschutzregelungen (9) zu den Zugriffsbedingungen auf besagte Daten durch besagte Einheit und Mittel für die Anwendung besagter Regelungen umfasst, wobei besagte Mittel umfassen:
- eine Identifizierungsfunktion für das Sammeln von Informationen über besagte Einheit und die Ausführungsumgebung (4) besagter Entität;
- eine Prüffunktion (8) für das Analysieren besagter Informationen zwecks Bestimmung eines Sicherheitsgrads, wobei besagte Funktion dafür ausgelegt ist, mindestens eine gemäß den Datenschutzregelungen (9) und besagtem Sicherheitsgrad auszuführende Handlung auszuwählen;
- eine Extrahierfunktion (11) für das Extrahieren eines Teils besagter Daten aus besagter Datei gemäß besagter gewählter Handlung, wobei besagte Funktion weiterhin dafür ausgelegt ist, die extrahierten Daten (10) über besagte Ausführungsumgebung besagter Einheit zur Verfügung zu stellen.

9. Datei (3) nach Anspruch 8, **dadurch gekennzeichnet, dass** die Mittel für die Anwendung der Regelungen weiterhin eine Zertifizierungsfunktion (5) umfassen, welche der Ausführungsumgebung (4) eine Zertifizierung zur Verfügung stellt, die vor dem Extrahieren von Daten (1) aus besagter Datei durch die Extrahierfunktion (11) gewährleistet, dass die Datei (3) sicher ist.

10. Datei (3) nach Anspruch 8 oder 9, **dadurch gekennzeichnet, dass** sie weiterhin einen Nutzungsverlauf (12) der Daten (1) umfasst, wobei die Extrahierfunktion (11) dafür ausgelegt ist, besagten Verlauf zu prüfen und besagte Daten gemäß besagtem Verlauf zu extrahieren.

11. Datei (3) nach einem jeglichen der Ansprüche 8 bis 10, **dadurch gekennzeichnet, dass** die Extrahierfunktion (11) dafür ausgelegt ist, den ausgelesenen Daten (10) vor ihrer Weiterleitung an die Einheit (2) Zugriffsrechte (13) zuzuweisen.

12. Datei (3) nach Anspruch 11, **dadurch gekennzeichnet, dass** die Extrahierfunktion (11) dafür ausgelegt ist, die ausgelesenen Daten (10) vor ihrer Weiterleitung an die Einheit (2) gemäß spezifischen Zugriffsrechten (13) zu verschlüsseln.

13. Datei (3) nach einem jeglichen der Ansprüche 8 bis 12, **dadurch gekennzeichnet, dass** die Prüffunktion (8) weiterhin dafür ausgelegt ist, um vor dem Extrahieren Daten (1) durch die Extrahierfunktion (11) eine Benachrichtigung bezüglich der gewählten Handlung an den Sender der Datei (3) zu senden, damit der Sender in die Auswahl besagter Handlung einbezogen wird.

14. Datei (3) nach einem jeglichen der Ansprüche 8 bis 13, **dadurch gekennzeichnet, dass** die Extrahierfunktion (11) dafür ausgelegt ist, um besagte Datei ohne das Extrahieren von Daten (1) zu löschen, wenn die Prüffunktion (8) einen minimalen Sicherheitsgrad festgestellt hat.

## Revendications

1. Procédé pour transmettre des données (1) à une entité (2) sur une infrastructure de réseau, ledit procédé prévoyant d'incorporer lesdites données dans un fichier (3) qui contient en outre des politiques de confidentialité (9) sur les conditions d'accès auxdites données par ladite entité et des moyens pour appliquer lesdites politiques, ledit procédé prévoyant en outre, lorsque ladite entité essaie d'exécuter ledit fichier :
- de collecter des informations sur ladite entité et l'environnement d'exécution (4) de ladite entité ;
- d'analyser lesdites informations pour déterminer un degré de sécurité, au moins une action à effectuer étant choisie en fonction de politiques de confidentialité (9) et dudit degré ;
- d'extraire des parties desdites données dudit fichier en fonction de ladite action choisie ;
- de remettre des données extraites (10) à ladite entité à travers ledit environnement d'exécution.

2. Procédé selon la revendication 1, **caractérisé en ce qu'**il prévoit en outre de fournir à l'environnement d'exécution (4) un certificat assurant que le fichier (3) est sûr avant l'extraction de données (1) dudit fichier.

3. Procédé selon la revendication 1 ou 2, **caractérisé en ce qu'**il prévoit en outre de vérifier l'historique d'utilisation (12) des données (1), lesdites données étant en outre extraites en fonction dudit historique.

4. Procédé selon l'une quelconque des revendications 1 à 3, **caractérisé en ce qu'**il prévoit en outre d'associer des droits d'accès (13) aux données extraites (10) avant leur remise à l'entité (2).

5. Procédé selon la revendication 4, **caractérisé en ce que** les données extraites (10) sont chiffrées en fonction de droits d'accès spécifiques (13) avant leur remise à l'entité (2).

6. Procédé selon l'une quelconque des revendications 1 à 5, **caractérisé en ce qu'**il prévoit en outre d'envoyer une notification de l'action choisie à l'expéditeur du fichier (3) avant d'extraire des données (1), de sorte que ledit expéditeur intervienne dans le choix de ladite action.

7. Procédé selon l'une quelconque des revendications 1 à 6, **caractérisé en ce que**, lorsque le degré de sécurité déterminé est minimal, ledit procédé prévoit en outre de supprimer le fichier (3) sans extraire les données (1).

8. Fichier (3) pour incorporer des données (1) devant être transmises à une entité (2) dans une infrastructure de réseau, ledit fichier contenant des politiques de confidentialité (9) sur les conditions d'accès auxdites données par ladite entité et des moyens pour appliquer lesdites politiques, lesdits moyens comprenant :
- une fonction d'identification (5) pour collecter des informations sur ladite entité et l'environnement d'exécution (4) de ladite entité ;
- une fonction de vérification (8) pour analyser lesdites informations pour déterminer un degré de sécurité, ladite fonction étant adaptée pour choisir au moins une action à effectuer en fonction de politiques de confidentialité (9) et dudit degré ;
- une fonction d'extraction (11) pour extraire des parties desdites données dudit fichier en fonction de ladite action choisie, ladite fonction étant en outre adaptée pour remettre des données extraites (10) à ladite entité à travers ledit environnement d'exécution.

9. Fichier (3) selon la revendication 8, **caractérisé en ce que** les moyens pour appliquer des politiques comprennent en outre une fonction de certification (6) qui fournit à l'environnement d'exécution (4) un certificat assurant que le fichier (3) est sûr avant que la fonction d'extraction (11) n'extraie de données (1) dudit fichier.

10. Fichier (3) selon la revendication 8 ou 9, **caractérisé en ce qu'**il comprend en outre un historique d'utilisation (12) des données (1), la fonction d'extraction (11) étant adaptée pour vérifier ledit historique et pour extraire lesdites données en fonction dudit historique.

11. Fichier (3) selon l'une quelconque des revendications 8 à 10, **caractérisé en ce que** la fonction d'extraction (11) est adaptée pour associer des droits d'accès (13) aux données extraites (10) avant de remettre lesdites données extraites à l'entité (2).

12. Fichier (3) selon la revendication 11, **caractérisé en ce que** la fonction d'extraction (11) est adaptée pour chiffrer les données extraites (10) en fonction de droits d'accès spécifiques (13) avant de remettre lesdites données extraites à l'entité (2).

13. Fichier (3) selon l'une quelconque des revendications 8 à 12, **caractérisé en ce que** la fonction de vérification (8) est adaptée pour envoyer une notification de l'action choisie à l'expéditeur du fichier (3) avant que la fonction d'extraction (11) n'extraie de données (1), de sorte que ledit expéditeur intervienne dans le choix de ladite action.

14. Fichier (3) selon l'une quelconque des revendications 8 à 13, **caractérisé en ce que** la fonction d'extraction (11) est adaptée pour supprimer ledit fichier sans extraire les données (1) lorsque la fonction de vérification (8) a déterminé un degré de sécurité minimal.
